# FASCICULE DE BREVET EUROPEEN

(11) **EP 1 111 260 B1**
(45) Date de publication et mention de la délivrance du brevet: **05.11.2008**
(21) Numéro de dépôt: 00127888.6
(22) Date de dépôt: 20.12.2000
(51) Int. Cl.: F16D 3/16

(54) **Dispositif d'accouplement entre un organe rotatif menant et un organe rotatif mené, en particulier pour tableau de commande**
Kupplungsvorrichtung zwischen eines führenden Gliedes und einem geführten Glied, insbesondere für eine Bedienvorrichtung
Coupling arrangement between an input and output rotary member, especially for a control panel

(30) Priorité: 22.12.1999 FR 9916262
(43) Date de publication de la demande: 27.06.2001
(73) Titulaire: VALEO ELECTRONIQUE, 94042 Créteil (FR)
(72) Inventeur: Korzeniewski, Ulrich, 94700 Maisons Alfort (FR); Bombard Stéphane, 94500 Champigny S/Marne (FR); Guilbault, Gaëtan, 77270 Villeparisis (FR)
(74) Mandataire: Croonenbroek, Thomas Jakob

(56) Documents cités:
- FR-A- 1 395 032
- GB-A- 794 265
- US-A- 3 117 431
- US-A- 4 790 795

## Description

L'invention concerne un dispositif d'accouplement entre un organe rotatif menant et un organe rotatif mené, liés respectivement à deux axes sensiblement alignés.

On connaît déjà des dispositifs de ce genre qui permettent d'assurer une transmission de mouvement entre ces deux organes, lorsqu'on actionne l'organe rotatif menant soit de façon manuelle, soit de façon motorisée.

Un tel dispositif d'accouplement peut être utilisé, par exemple, pour assurer une liaison en rotation entre un bouton de commande et un mécanisme commandé par ce bouton de commande.

Dans une application préférentielle de l'invention, le bouton de commande est centré dans une façade d'un tableau de commande, tandis que le mécanisme commandé par le bouton de commande fait partie d'une carte électronique ou d'une platine intégrant des pistes de puissance.

Un dispositif d'accouplement de ce type peut être utilisé notamment pour assurer un accouplement entre un bouton de commande associé à un tableau de commande d'un véhicule automobile pour commander un mécanisme tel que, par exemple, un potentiomètre ou un commutateur électrique monté sur une carte électronique n'ayant pas de liaison avec la façade du tableau de commande.

Un tel dispositif d'accouplement permet de transmettre le mouvement entre les deux organes. Comme les axes respectifs de ces deux organes ne peuvent jamais en pratique être rigoureusement alignés, le dispositif d'accouplement doit permettre de rattraper la non-coaxialité entre les axes respectifs de l'organe menant et de l'organe mené.

On entend ici par "non-coaxialité" le fait que les deux axes sont parallèles avec une distance non nulle entre eux et/ou que les deux axes ne sont pas strictement parallèles.

En outre, un tel dispositif d'accouplement doit permettre, le plus souvent, de rattraper des jeux dans la direction axiale étant donné qu'un tel dispositif peut être utilisé dans un boîtier dans lequel viennent s'empiler plusieurs pièces. Or, ces pièces possèdent, dans la direction axiale, des dimensions qui présentent des tolérances et le montage des pièces ne permet pas un empilement précis des pièces.

On connaît déjà des dispositifs d'accouplement qui permettent de rattraper une non-coaxialité entre deux axes rotatifs couplés respectivement à un organe rotatif menant et à un organe rotatif mené.

Un dispositif connu de ce type, appelé "joint de Oldham", comporte deux glissières orthogonales qui permettent d'effectuer un rattrapage de jeu.

Cependant, ce joint connu nécessite plusieurs pièces qui occupent de l'espace, et il nécessite en outre un graissage. De plus, il ne peut fonctionner que lorsque les axes respectifs de l'organe menant et de l'organe mené sont parallèles.

Les caractéristiques du préambule sont connues du US-A-4790795 ou du FR-A-1395032.

L'invention a notamment pour but de surmonter les inconvénients précités.

Elle vise en particulier à procurer un dispositif d'accouplement entre un organe rotatif menant et un organe rotatif mené qui peut être réalisé facilement et à moindre coût, qui soit en outre d'un faible encombrement et ne nécessite pas de graissage.

Elle vise aussi à procurer un tel dispositif d'accouplement qui permet d'effectuer un rattrapage de non-coaxialité entre les deux axes de manière automatique.

L'invention propose à cet effet un dispositif d'accouplement avec les caractéristiques de la revendication 1.

Ainsi, le dispositif de l'invention est constitué essentiellement de deux pièces, un levier et une coulisse qui peuvent être liés indifféremment à l'organe rotatif menant et à l'organe rotatif mené.

La rainure comporte deux faces principales opposées parallèles entre elles qui définissent la largeur de la rainure.

Selon l'invention, le doigt est fendu au moins en partie pour définir deux lèvres déformables propres à coulisser respectivement contre les deux faces principales opposées de la rainure.

A titre d'exemple, le levier est lié à l'axe de l'organe rotatif menant, tandis que la coulisse est liée à l'axe de l'organe rotatif mené.

Avantageusement, la rainure a une largeur et le doigt une dimension transversale choisies, en sorte que le doigt coulisse sans jeu dans la rainure.

Ainsi, on assure une transmission sans jeu entre le levier et la coulisse.

On préfère alors que le doigt possède, au niveau des lèvres déformables, une dimension transversale égale ou légèrement supérieure à la largeur de la rainure.

La rainure possède soit deux extrémités fermées, soit une extrémité fermée du côté proche de l'axe et une extrémité ouverte du côté éloigné de l'axe.

Dans une forme de réalisation de l'invention, le doigt possède une forme généralement cylindrique.

En variante, il peut posséder une forme généralement sphérique.

Il est avantageux que le doigt puisse en outre coulisser dans la rainure dans la direction axiale, ce qui permet de rattraper un jeu dans la direction axiale.

Avantageusement, le premier levier et le second levier sont réalisés par moulage d'une matière plastique.

Dans une variante de réalisation, le dispositif d'accouplement de l'invention peut comprendre un commutateur du type à poussée, ou "push", combiné à l'organe rotatif mené et propre à être actionné par une poussée axiale exercée sur l'axe de l'organe rotatif menant et transmise par déformation axiale du dispositif d'accouplement.

Dans une application de l'invention, l'organe rotatif menant est un bouton de commande faisant partie d'un tableau de commande, tandis que l'organe rotatif mené est un mécanisme faisant partie d'une carte électronique ou d'une carte électronique, telle que citée précédemment.

Dans la description qui suit, faite seulement à titre d'exemple, on se réfère aux dessins annexés, sur lesquels :
- la figure 1 est une vue schématique en perspective éclatée d'un dispositif d'accouplement selon l'invention ;
- la figure 2 est une vue en élévation d'une coulisse selon une forme de réalisation ;
- la figure 3 est une vue en élévation d'une coulisse selon une autre forme de réalisation ;
- les figures 4, 5 et 6 sont des vues d'extrémités du levier pour trois formes de réalisations différentes du doigt ;
- la figure 7 est une vue en perspective éclatée d'un bouton rotatif centré sur un tableau de commande et relié à un mécanisme rotatif d'une carte électronique par l'intermédiaire d'un dispositif d'accouplement selon l'invention ;
- la figure 8 est une vue en perspective par l'avant du tableau de commande ; et
- la figure 9 est une vue en perspective par l'arrière du tableau de commande.

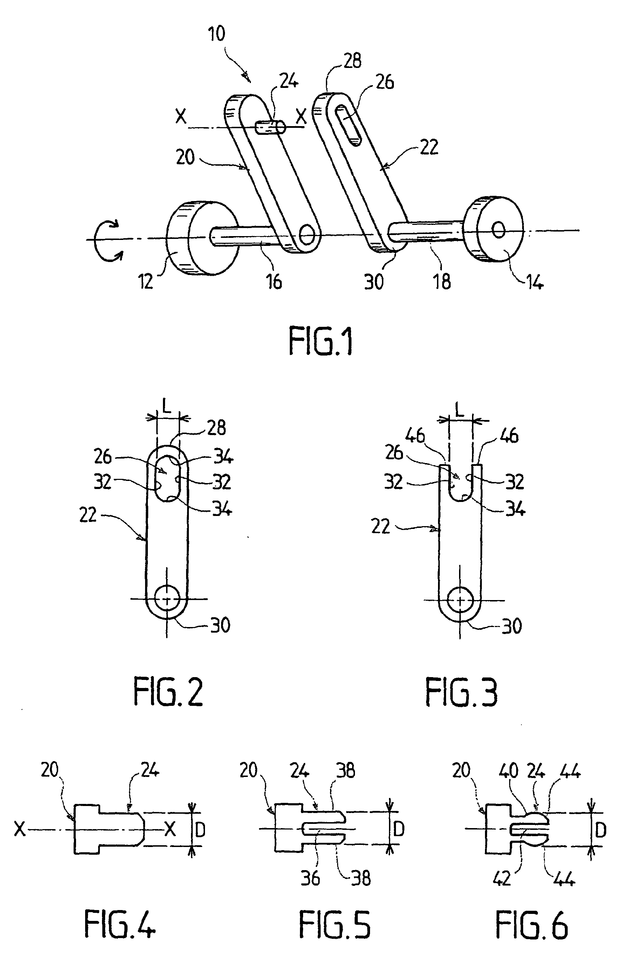

On se réfère d'abord à la figure 1 qui montre un dispositif d'accouplement 10 selon l'invention interposé entre un organe rotatif menant 12 et un organe rotatif mené 14, lesquels sont solidaires en rotation d'axes respectifs 16 et 18 sensiblement alignés.

Dans une application particulière de l'invention, l'organe rotatif menant 12 est un bouton de commande, tandis que l'organe rotatif mené 14 est un mécanisme commandé, par exemple un potentiomètre, un commutateur électrique, etc. Le bouton de commande 12 est habituellement centré sur une façade d'un tableau de commande (non représenté), tandis que l'organe mené 14 est placé en arrière de la façade.

Lors du montage d'un tableau de commande de ce type, il existe nécessairement des dispersions dues à des tolérances de fabrication ou de montage, qui font qu'il est impossible de réaliser une coïncidence parfaite entre les axes géométriques correspondants aux axes 16 et 18, si bien qu'il est nécessaire de prévoir un mécanisme de rattrapage.

Ce mécanisme permet de rattraper la "non-coaxialité" du fait que les deux axes 16 et 18 sont parallèles avec une distance non nulle et/ou que ces deux axes ne sont pas strictement parallèles.

En outre, il peut exister un faible jeu dans la direction axiale du fait des tolérances de fabrication et de montage.

Le dispositif d'accouplement 10 de l'invention permet d'effectuer un tel rattrapage. Il comprend un levier 20 (encore appelé index) lié à l'axe 16 et une coulisse 22 (encore appelée fourchette) liée à l'axe 18. En variante, le levier 20 pourrait être lié à l'axe 18 et la coulisse 22 à l'axe 16.

La liaison du levier 20 avec l'axe 16 et la liaison de la coulisse 22 avec l'axe 18 sont réalisés par tout moyen approprié pour qu'il existe une solidarisation en rotation. Ces deux liaisons peuvent être réalisés par exemple par vissage, emmanchement à force avec ou sans moyen complémentaire de transmission de mouvement rotatif de type clavette, cannelure, etc.

Le levier 20 s'étend dans la direction radiale par rapport à l'axe 16 et il porte, à distance de l'axe, un doigt 24 qui présente un axe XX parallèle à l'axe 16. Dans l'exemple de réalisation, le doigt 24 (figures 1 et 4) est de forme générale cylindrique circulaire et il possède un diamètre extérieur D de valeur choisie.

La coulisse 22 s'étend dans une direction radiale par rapport à l'axe 18 et elle délimite une rainure 26 s'étendant en direction sensiblement radiale et placée proche d'une extrémité 28 de la coulisse 22, à l'opposé de son extrémité 30 qui est couplée à l'axe 18.

Dans l'exemple de réalisation (figures 1 et 2) la rainure 26 a la forme d'une fente oblongue qui traverse la coulisse 22 dans la direction axiale. Cette rainure 26 comporte deux faces principales opposées 32 s'étendant dans la direction radiale et reliées entre elles par deux faces 34 de forme générale semi-circulaire. Les deux faces 32 sont parallèles entre elles et définissent la largeur L de la rainure.

Le doigt 24 est propre à s'engager dans la rainure 26 pour assurer une transmission de mouvement entre le levier 20 et la coulisse 22.

Du fait que les axes 16 et 18 ne sont pas parfaitement coaxiaux, lors de la transmission de mouvement, le doigt 24 va coulisser dans la rainure 26, dans la direction radiale.

La dimension transversale D (qui correspond ici au diamètre) du doigt 24 et la largeur L de la rainure 26 sont choisies pour que le coulissement s'effectue sans jeu.

Dans le cas des figures 1 et 4, le doigt 24 est plein et la dimension transversale D doit être sensiblement égale à la largeur L de la fente.

Il est à noter que ce dispositif permet de rattraper le défaut de co-axialité et également un jeu dans la direction axiale. En effet, en pratique, la distance qui sépare le levier 20 de la coulisse 22 peut varier du fait des tolérances de fabrication et de montage.

Dans la forme de réalisation de la figure 5, le doigt 24 possède une forme générale cylindrique mais est fendu. Il comporte en effet une fente diamétrale 36 s'étendant sur au moins une partie du doigt, ce qui permet de définir deux lèvres 38 déformables. On notera que ces deux lèvres 38 viennent coulisser respectivement contre les faces principales opposées 32 de la rainure 26. Il est avantageux que le doigt possède, au niveau des lèvres déformables 38, une dimension transversale D qui soit égale ou légèrement supérieure à la largeur L de la rainure. De la sorte, les lèvres 38 viennent frotter élastiquement contre les faces 32 de la rainure 26, contribuant à assurer une transmission sans jeu.

Dans la forme de réalisation de la figure 6, le doigt 24 comprend une partie sphérique 40 de dimension transversale D qui est munie d'une fente diamétrale 42 pour définir deux lèvres 44. La dimension transversale D du doigt, au niveau des deux lèvres 44, est avantageusement égale ou légèrement supérieure à la largeur L de la fente, comme dans le cas de la figure 5.

Dans la forme de réalisation de la figure 3, la coulisse 22 est sensiblement analogue à celle de la figure 2, à la différence que la rainure 26 possède ici une extrémité fermée 34 du côté proche de l'axe et une extrémité ouverte 46 du côté éloigné de l'axe.

Le levier 20 et la coulisse 22 sont avantageusement réalisés par moulage d'une matière plastique. Il peut être avantageux aussi que le levier et la coulisse soient à chaque fois réalisés d'un seul bloc avec l'axe correspondant.

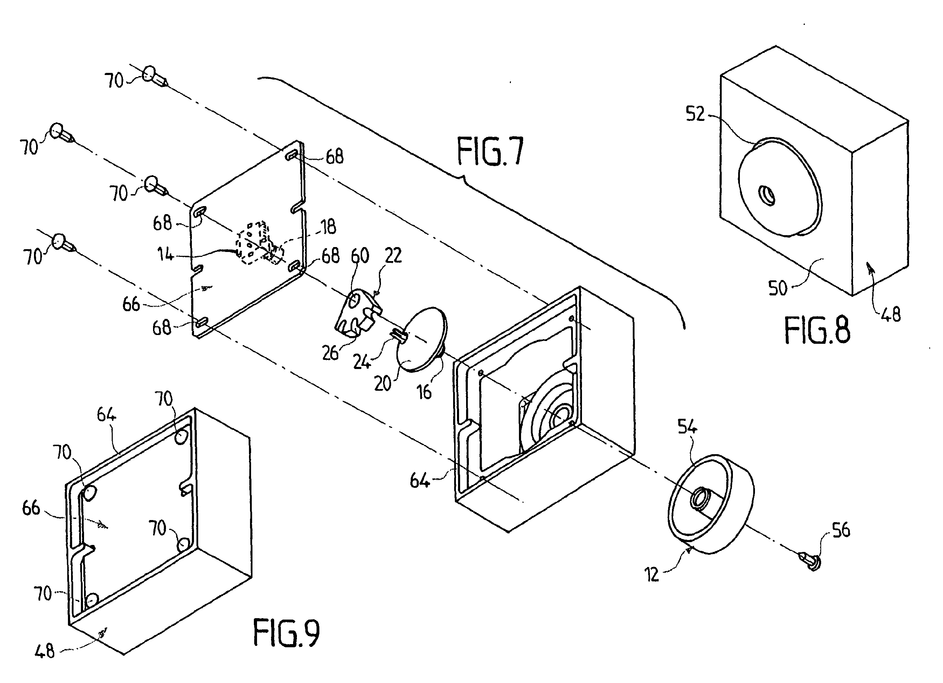

On se réfère maintenant aux figures 7 à 9 qui montrent un exemple d'application de l'invention.

Dans cet exemple, l'organe rotatif menant 12 est un bouton rotatif propre à être centré dans un tableau de commande 48 réalisé sous la forme d'un boîtier propre à être intégré, par exemple, dans une planche de bord d'un véhicule automobile.

Le tableau de commande 48 comporte une façade 50 délimitant une gorge annulaire 52 pour recevoir une jupe 54 (figure 7) que comporte le bouton de commande 12. Ce bouton de commande est assujetti à l'axe 16 par une vis auto-taraudeuse 56.

L'axe 16 est réalisé d'une seule pièce avec le levier 20 qui, dans l'exemple, a la forme d'un plateau portant le doigt 24. Dans l'exemple, la coulisse 22 a la forme d'un secteur comportant une ouverture circulaire 60 propre à être couplée solidairement à l'axe 18 de l'organe rotatif mené 14. La coulisse 22 comporte une rainure 26 dans laquelle vient s'engager le doigt 24. Cette rainure 26 est entourée par deux autres rainures analogues procurant d'autres possibilités de montage.

Le tableau de commande 48 définit un conduit de lumière propre à éclairer au moins en partie le bouton de commande 12 et la façade 50, cette dernière étant munie de symboles ou pictogrammes appropriés (non représentés) pour permettre d'identifier la position prise par l'organe rotatif menant 12, qui forme bouton de commande.

Le tableau de commande 48 possède une face postérieure ouverte 64 (figures 7 et 9) dans laquelle vient s'encastrer une carte électronique 66 de forme générale rectangulaire . Cette carte électronique comporte quatre ouvertures 68 propres à être traversées par quatre vis 70 pour permettre son montage à l'arrière du tableau de commande.

La carte 66 porte, dans sa partie centrale, l'organe mené 14 qui, dans l'exemple, est un mécanisme commandé, tel qu'un potentiomètre ou un interrupteur, pouvant être piloté par l'axe 18.

L'accouplement 10 permet ainsi de rattraper un défaut de coaxialité éventuel entre les axes 16 et 18 et éventuellement un rattrapage de jeu dans la direction axiale.

Il en résulte que, en dépit des tolérances dimensionnelles et des tolérances de montage, le mécanisme 10 permet d'assurer une transmission de mouvements, de manière simple et efficace, entre l'organe menant 12 et l'organe mené 14.

Dans une variante de réalisation (non représentée), le dispositif peut comprendre un commutateur du type à poussée, encore appelé de type "push", combiné à l'organe rotatif mené 14 et propre à être actionné par une poussée axiale exercée sur l'axe 16 de l'organe rotatif menant 12 et transmise par déformation axiale du dispositif d'accouplement.

En effet, la distance axiale entre le levier 20 et la coulisse 22 au niveau de l'axe de rotation est très faible, voire nulle. Ainsi, lorsque l'on appuie sur le bouton de commande 12, le levier 20 appuie sur la coulisse 22, ce qui permet de transmettre une force dans la direction axiale et d'actionner ainsi le commutateur à poussée qui est combiné à l'organe rotatif mené.

Le dispositif de l'invention offre en outre l'avantage supplémentaire de pouvoir être réalisé avec un minimum de pièces et de pouvoir fonctionner sans jeu, contrairement aux joints du type Oldham qui comportent deux glissières orthogonales.

Le dispositif de l'invention trouve une application particulière aux tableaux de commande utilisés dans les véhicules automobiles.

## Revendications

1. Dispositif d'accouplement entre un organe rotatif menant et un organe rotatif mené liés respectivement à deux axes sensiblement alignés,
comprenant un levier (20) lié à l'un des deux axes (16, 18) et portant un doigt (24) de forme choisie s'étendant parallèlement à l'axe et à distance de lui, ainsi qu'une coulisse (22) liée à l'autre des deux axes et comportant au moins une rainure (26) s'étendant dans une direction sensiblement radiale et servant de glissière pour le doigt (24) du levier (20).
la rainure (26) comportant deux faces principales opposées (32) parallèles entre elles qui définissent une largeur (L) de la rainure,
**caractérisé en ce que** le doigt (24) est fendu au moins en partie pour définir deux lèvres déformables (38 ; 44) propres à coulisser respectivement contre les deux faces principales opposées (32) de la rainure (26) sans jeu*.*

2. Dispositif selon la revendication 1, **caractérisé en ce que** la rainure (26) a une largeur (L) et le doigt (24) une dimension transversale (D) choisies en sorte que le doigt coulisse sans jeu dans la rainure.

3. Dispositif selon la revendication 2, **caractérisé en ce que** le doigt (24) possède au niveau des lèvres déformables, la dimension transversale (D) égale ou légèrement supérieure à la largeur (L) de la rainure (26).

4. Dispositif selon l'une des revendications 1 à 3,
**caractérisé en ce que** la rainure (26) possède deux extrémités fermées (34, 34).

5. Dispositif selon l'une des revendications 1 à 3,
**caractérisé en ce que** la rainure (26) possède une extrémité fermée (34) du côté proche de l'axe et une extrémité ouverte (46) du côté éloigné de l'axe.

6. Dispositif selon l'une des revendications 1 à 5,
**caractérisé en ce que** le doigt (24) possède une forme généralement cylindrique.

7. Dispositif selon l'une des revendications 1 à 5,
**caractérisé en ce que** le doigt (24) possède une forme généralement sphérique.

8. Dispositif selon l'une des revendications 1 à 7,
**caractérisé en ce que** le doigt (24) est en outre propre à coulisser dans la rainure (26) dans la direction axiale.

9. Dispositif selon l'une des revendications 1 à 8,
**caractérisé en ce que** le levier (20) et la coulisse (22) sont réalisés par moulage d'une matière plastique.

10. Dispositif selon l'une des revendications 1 à 9,
**caractérisé en ce qu'**il comprend un commutateur du type à poussée, ou "push", combiné à l'organe rotatif mené (14) et propre à être actionné par une poussée axiale exercée sur l'axe (16) de l'organe rotatif menant (12) et transmise par déformation axiale du dispositif d'accouplement.

11. Dispositif selon l'une des revendications 1 à 10,
**caractérisé en ce que** l'organe rotatif menant (12) est un bouton de commande faisant partie d'un tableau de commande (48), tandis que l'organe rotatif mené (14) est un mécanisme faisant partie d'une carte électronique (66) ou d'une platine surmoulée.

## Claims

1. A coupling device between a rotary driving mechanism and a rotary driven mechanism connected respectively to two essentially aligned shafts,
comprising a lever (20) connected to one of the two shafts (16, 18) and supporting a finger (24) of a selected shape extending parallel to the shaft and at a distance from it, together with a slide (22) connected to the other of the two shafts and having at least one groove (26) extending in an essentially radial direction and serving as a slide for the finger (24) of the lever (20), wherein the groove has two opposed main faces (32) parallel with each other, which define a width (L) of the groove,
**characterised in that** the finger (24) is slotted at least partially to define two deformable lips (38; 44) capable of sliding respectively against the two opposed main faces (32) of the groove (26) without clearance.

2. The device according to Claim 1, **characterised in that** the groove (26) has a width (L) and the finger (24) has a transversal dimension (D), selected so that the finger slides in the groove without clearance.

3. The device according to Claim 2, **characterised in that** the finger (24), at the level of the deformable lips, has the transversal dimension (D) equal or slightly greater than the width (L) of the groove (26).

4. The device according to any one of Claims 1 to 3, **characterised in that** the groove (26) has two closed ends (34, 34).

5. The device according to any one of Claims 1 to 3, **characterised in that** the groove (26) has one end closed (34) on the side close to the shaft, and one end open (46) on the side distant from the shaft.

6. The device according to any one of Claims 1 to 5, **characterised in that** the finger (24) has a generally cylindrical shape.

7. The device according to any one of Claims 1 to 5, **characterised in that** the finger (24) has a generally spherical shape.

8. The device according to any one of Claims 1 to 7, **characterised in that** the finger (24) is also capable of sliding in the groove (26) in the axial direction.

9. The device according to any one of Claims 1 to 8, **characterised in that** the lever (20) and the slide (22) are constructed by moulding from a plastic material.

10. The device according to any one of Claims 1 to 9, **characterised in that** it comprises a changeover switch of the "push" type, combined with the rotary driven mechanism (14) and capable of being actuated by an axial thrust exerted on the shaft (16) of the rotary driving mechanism (12) and transmitted by axial deformation of the coupling device.

11. The device according to any one of Claims 1 to 10, **characterised in that** the rotary driving mechanism (12) is a control button forming part of a control panel (48), whilst the rotary driven mechanism (14) is a mechanism forming part of an electronic board (66) or a moulded plate.

## Patentansprüche

1. Kupplungsvorrichtung zwischen einem Antriebsdrehelement und einem
Abtriebsdrehelement, welche jeweils mit einer zueinander weitgehend fluchtenden Achse verbunden sind, umfassend einen Hebel (20), der mit einer der beiden Achsen (16, 18) verbunden ist und einen Zapfen (24) in bestimmter Form aufweist, wobei der Zapfen parallel zur Achse und in einem bestimmten Abstand zu ihr angebracht ist; sowie eine Schubleiste (22), die mit der anderen Achse verbunden ist und mindestens eine Nut (26) aufweist, welche weitgehend in radialer Richtung verläuft und als Führungsbahn für den Zapfen (24) des Hebels (20) dient, wobei die Nut (26) zwei einander parallel gegenüber liegende Hauptseitenflächen (32) umfasst, die die Nutbreite (L) bestimmen, **dadurch gekennzeichnet, dass** der Zapfen (24) zumindest teilweise gespalten ist und so zwei verformbare Lippen (38, 44) bildet, welche geeignet sind, auf der jeweils gegenüberliegenden Hauptseitenfläche (32) der Nut (26) spielfrei zu gleiten.

2. Vorrichtung nach Anspruch 1, **dadurch gekennzeichnet, dass** die Nut (26) eine Breite (L), und der Zapfen (24) einen Durchmesser (D) aufweist, dergestalt, dass der Zapfen spielfrei in der Nut gleitet.

3. Vorrichtung nach Anspruch 2, **dadurch gekennzeichnet, dass** der Durchmesser des Zapfens (24) im Bereich der verformbaren Lippen gleich groß oder geringfügig größer ist als die Breite (L).

4. Vorrichtung nach einem der Ansprüche von 1 bis 3, **dadurch gekennzeichnet, dass** die Nut (26) zwei geschlossene Enden (34, 34) aufweist.

5. Vorrichtung nach einem der Ansprüche von 1 bis 3, **dadurch gekennzeichnet, dass** die Nut (26) auf der der Achse zugewandten Seite ein geschlossenes Ende (34), und auf der der Achse abgewandten Seite ein offenes Ende (46) aufweist.

6. Vorrichtung nach einem der Ansprüche 1 bis 5, **dadurch gekennzeichnet, dass** der Zapfen (24) in der Regel eine zylindrische Form aufweist.

7. Vorrichtung nach einem der Ansprüche 1 bis 5, **dadurch gekennzeichnet, dass** der Zapfen (24) in der Regel eine Kugelform aufweist.

8. Vorrichtung nach einem der Ansprüche 1 bis 7, **dadurch gekennzeichnet, dass** der Zapfen (24) außerdem dazu geeignet ist, in der Nut (26) in axialer Richtung zu gleiten.

9. Vorrichtung nach einem der Ansprüche von 1 bis 8, **dadurch gekennzeichnet, dass** der Hebel (20) und die Schubleiste (22) aus einem Kunststoff gegossen sind.

10. Vorrichtung nach einem der Ansprüche von 1 bis 9, **dadurch gekennzeichnet, dass** sie einen Schiebeschalter aufweist, der mit dem Antriebsdrehelement (14) kombiniert ist und durch axialen Druck auf die Achse (16) des Antriebsdrehelements (12), mit Übertragung des Drucks durch axiale Verformung der Kupplungsvorrichtung, zu betätigen ist.

11. Vorrichtung nach einem der Ansprüche von 1 bis 10, **dadurch gekennzeichnet, dass** das Antriebsdrehelement (12) einen Steuerknopf darstellt, der Bestandteil eines Steuerpults (48) ist, während das Abtriebsdrehelement (14) einen Mechanismus darstellt, der Bestandteil einer elektronischen Karte (66) oder einer umformten Platine ist.
